(19) **Europäisches Patentamt / European Patent Office / Office européen des brevets**

(11) **EP 1 760 908 B1**

(12) # EUROPEAN PATENT SPECIFICATION

(45) Date of publication and mention
of the grant of the patent:
**29.07.2009 Bulletin 2009/31**

(51) Int Cl.:
*H04B 7/26* (2006.01)    *H04L 1/00* (2006.01)

(21) Application number: **05791926.8**

(22) Date of filing: **19.09.2005**

(86) International application number:
**PCT/CN2005/001486**

(87) International publication number:
**WO 2006/032192 (30.03.2006 Gazette 2006/13)**

(54) **METHOD FOR ENCODING ENHANCED UPLINK SIGNALLING IN A WCDMA SYSTEM**

VERFAHREN ZUR SIGNALISIERUNGSKODIERUNG DER VERBESSERTEN AUFWÄRTSRICHTUNG IN EINEM WCDMA-SYSTEM

PROCEDE POUR CODER UNE SIGNALISATION DE LIAISON MONTANTE AMELIOREE DANS UN SYSTEME WCDMA

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.09.2004  CN 200410078034**

(43) Date of publication of application:
**07.03.2007  Bulletin 2007/10**

(73) Proprietor: **Huawei Technologies Co., Ltd.
Longgang District,
Shenzhen
Guangdong 518129 (CN)**

(72) Inventors:
• **XU, Liang,
Huawei Administration Bld.
Guangdong 518129 (CN)**

• **ZHU, Xueqing,
Huawei Administration Bld.
Guangdong 518129 (CN)**
• **HUANG, Xinye,
Huawei Administration Bld.
Guangdong 518129 (CN)**
• **CAO, Aijun,
Huawei Administration Bld.
Guangdong 518129 (CN)**

(74) Representative: **Manitz, Finsterwald & Partner GbR
Martin-Greif-Strasse 1
80336 München (DE)**

(56) References cited:
| | |
|---|---|
| **EP-A1- 1 248 485** | **WO-A-01/26269** |
| **WO-A1-02/069514** | **WO-A2-01/58107** |
| **WO-A2-02/17550** | **CN-A- 1 630 380** |
| **US-A1- 2002 154 618** | |

**Description**

**Field of the Invention**

The present invention relates to wireless communications, and more particularly, to a method and an apparatus for coding of an E-DPCCH (E-DCH (Enhanced Dedicated Channel) Dedicated Physical Control Channel).

**Background of the Invention**

Wideband Code Division Multiple Access (WCDMA) of which the system is being perfected represents one of the three main 3rd Generation (3G) standards. In Release 5, WCDMA introduces a High Speed Downlink Packet Access (HSDPA) technique, which has been one of the most important characters of Release 5. The HSDPA technique, which enables the throughput of the WCDMA downlink to be two to three times the throughput provided by the prior releases, can be an effective bearer of various packet services, satisfying the demand for such multimedia service information as data, video, image and the like apart from voice anywhere at any moment.

Correspondingly, it is considered to introduce the standard of a High Speed Uplink Packet Access (HSUPA) technique into Release 6 of WCDMA. The core target of the HSUPA technique is to enable the throughput of a WCDMA uplink to increase by 50% to 70% than that provided by the prior releases to enhance the throughput of uplink packet data using several enhanced uplink techniques. HSUPA technique is an up-to-date technique, and the standard of HSUPA technique in Release 6 of a WCDMA system protocol is being shaped.

At present, while which coding manner will be adopted for an E-DPCCH of HSUPA technique has not been specified, the main technical solution is to adopt a Convolutional Coding (CC) manner. The current CC in WCDMA defines two coding rates of which one is 1/2 and the other is 1/3, and the constraint length is 9; tail bits having 8 bits of value 0 often need to be added to the coding block to be encoded so as to assist the CC. Although the CC is a mature coding technique, adding 8-bit tail bits to the coding block will bring a considerable signalling overhead for an E-DPCCH due to fewer effective bits of signalling on an E-DPCCH, for example, NodeB scheduling information consists of at most 10 effective bits and a Hybrid Automatic Repeat Request (HARQ) consists of at most 12 effective bits. As shown in Table 1, the numbers of signalling overhead of the tail bits of the NodeB scheduling information and HARQ information are 44% and 40%, respectively.

Table 1

| Signalling contents | Number of information bits | Number of tail bits | Signalling overhead |
|---|---|---|---|
| NodeB scheduling information | 10 | 8 | 44% |
| HARQ information | 12 | 8 | 40% |

The patent application EP 1 248 485 A1 discloses a method for coding an HS-DPCCH which comprises the encoding of bits of signaling of the same channel in a block coding manner. A new UL-DPCCH, that is, HS-DPCCH, is defined for transmitting control signals of HSDPA so as to ensuring compatibility between an HSDPA UE/node B and a non-HSDPA node B/UE. The control information carried by HS-DPCCH includes COI, ACK/NACK, and BCI. (10, 1) block coding, (10, 6) block coding and (20, 3) block coding are used for encoding 1 bit, 6 bits and 3 bits of control information respectively.

**Summary of the Invention**

Embodiments of the present invention provide a method and apparatus for coding of an E-DCH Dedicated Physical Control Channel (E-DPCCH), encoding an E-DPCCH with lower signalling coding overhead.

According to an embodiment, the method for coding of an E-DPCCH includes:

encoding information bits of signalling on an E-DPCCH in a BLOCK coding manner.

Said encoding the information bits of signalling includes:

dividing the information bits of signalling on the E-DPCCH into at least one data block if the number of the information bits of signalling on the E-DPCCH is not more than a threshold; and encoding the data block.

The threshold is at most 10 to 12. Said encoding the data block includes: encoding the data block with a second-order Reed-Muller encoder.

According to another embodiment, the apparatus for coding of an E-DCH Dedicated Physical Control Channel (E-DPCCH) includes:

a unit for encoding information bits of signalling on an E-DPCCH in a BLOCK coding manner.

The unit includes:

a module for dividing the information bits of signalling on the E-DPCCH into at least one data block;

a module for encoding the data block in the BLOCK coding manner.

The module for encoding the data block in a BLOCK coding manner includes one or a plurality of BLOCK encoders, used for encoding the data blocks consisting of different numbers of information bits in a BLOCK coding manner; and said BLOCK encoder is a second-order Reed-Muller encoder.

The unit encodes the information bits of signalling on the E-DPCCH in the BLOCK coding manner if the number of the information bits of signalling on the E-DPCCH is not more than a threshold.

Through analyzing the overhead of the information bits of signalling on an E-DPCCH in the CC manner, the method in accordance with an embodiment of the present invention adopts a BLOCK coding manner for signalling on E-DPCCH in the HSUPA technique, which encodes the information bits to be transferred as a data block without being annoyed by each traditional and complicated coding manner and the 8-bit tail bits in the CC manner, thereby simply and effectively reducing signalling overhead and saving transmission power of a terminal.

### Brief Description of the Drawings

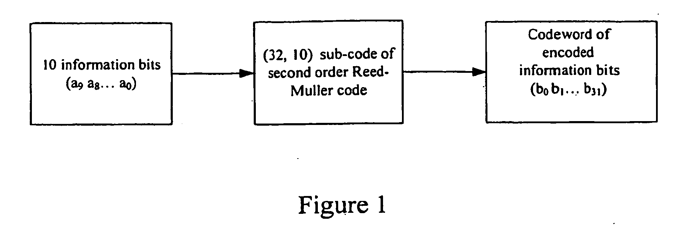

Figure 1 is a simplified diagram illustrating a channel coding process of information bits of signalling in accordance with an embodiment of the present invention.

### Detailed Description of the Invention

The present invention is hereinafter further described in detail with reference to the accompanying drawings and preferred embodiments to further clarify the technical solutions and advantages of the present invention.

Though almost all coding techniques conventionally used are maturely, a CC technique, as a coding technique with simple implementation and high encoding performance, is adopted widely in the art. However, tail bits having 8 bits of value 0 often need to be added to the coding block before being encoded so as to assist the CC during the coding procedure thereof adopted in a WCDMA system, which has little impact on the case that the information bits to be encoded are relatively more but brings obvious waste of power (about 2.6 dB) in the case that information bits are fewer, especially in the case of signalling coding. An embodiment of the present invention provides a BLOCK coding in view of the characteristic that information bits of signalling are fewer on an E-DPCCH, for example number of information bits is 10 or 12. An embodiment of the present invention describes the coding process, for example, in the case that the number of information bits of signalling is 10.

As shown in Figure 1, a BLOCK coding is performed with a second-order Reed-Muller encoder which may generate 32-bit output codes after encoding if 10 bits are inputted. The encoder has, for example, the combinations of 10 basic sequences which are listed in Table 2. Information bits to be encoded are divided into at least one data block, and each data block consists of 10 bits and is inputted into the encoder. 10-bit information bits are, for example, considered as a data block, and the data block is inputted into the encoder in turn as a0, a1, a2, a3, a4, a5, a6, a7, a8 and a9 respectively, which correspond to information bits index expressed in unsigned binary form. The output codeword bits corresponding to the information bits index are, for example, given by:

$$b_i = \sum_{n=0}^{9}(a_n \times M_{i,n}) \bmod 2 ;$$

where i is the sequence number of the output codeword bits, $M_{i,n}$ is the i-th value of the n-th basic sequence shown in

Table 2, and $b_i$(i= 0, 1, 2, ..., 31) denote the output codeword bits. $b_i$(i = 0, 1, 2, ..., 29) are selected as 30-bit codeword of the information bits.

Other encoders which may implement BLOCK coding also may be adopted. The BLOCK coding disclosed by an embodiment of the present invention is suitable for the situation that the overhead of CC exceeds a threshold. For example, if the overhead of the tail bits in CC occupies, for example, more than 30% of all overhead, the BLOCK coding manner according to an embodiment of the present invention may be adopted for encoding.

Table 2

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ |
|---|---|---|---|---|---|---|---|---|---|---|
| 0 | 1 | 0 | 0 | 0 | 0 | 1 | 0 | 0 | 0 | 0 |
| 1 | 0 | 1 | 0 | 0 | 0 | 1 | 1 | 0 | 0 | 0 |
| 2 | 1 | 1 | 0 | 0 | 0 | 1 | 0 | 0 | 0 | 1 |
| 3 | 0 | 0 | 1 | 0 | 0 | 1 | 1 | 0 | 1 | 1 |
| 4 | 1 | 0 | 1 | 0 | 0 | 1 | 0 | 0 | 0 | 1 |
| 5 | 0 | 1 | 1 | 0 | 0 | 1 | 0 | 0 | 1 | 0 |
| 6 | 1 | 1 | 1 | 0 | 0 | 1 | 0 | 1 | 0 | 0 |
| 7 | 0 | 0 | 0 | 1 | 0 | 1 | 0 | 1 | 1 | 0 |
| 8 | 1 | 0 | 0 | 1 | 0 | 1 | 1 | 1 | 1 | 0 |
| 9 | 0 | 1 | 0 | 1 | 0 | 1 | 1 | 0 | 1 | 1 |
| 10 | 1 | 1 | 0 | 1 | 0 | 1 | 0 | 0 | 1 | 1 |
| 11 | 0 | 0 | 1 | 1 | 0 | 1 | 0 | 1 | 1 | 0 |
| 12 | 1 | 0 | 1 | 1 | 0 | 1 | 0 | 1 | 0 | 1 |
| 13 | 0 | 1 | 1 | 1 | 0 | 1 | 1 | 0 | 0 | 1 |
| 14 | 1 | 1 | 1 | 1 | 0 | 1 | 1 | 1 | 1 | 1 |
| 15 | 1 | 0 | 0 | 0 | 1 | 1 | 1 | 1 | 0 | 1 |
| 16 | 0 | 1 | 0 | 0 | 1 | 1 | 1 | 1 | 0 | 1 |
| 17 | 1 | 1 | 0 | 0 | 1 | 1 | 1 | 0 | 1 | 0 |
| 18 | 0 | 0 | 1 | 0 | 1 | 1 | 0 | 1 | 1 | 1 |
| 19 | 1 | 0 | 1 | 0 | 1 | 1 | 0 | 1 | 0 | 1 |
| 20 | 0 | 1 | 1 | 0 | 1 | 1 | 0 | 1 | 0 | 1 |
| 21 | 1 | 1 | 1 | 0 | 1 | 1 | 0 | 1 | 1 | 1 |
| 22 | 0 | 0 | 0 | 1 | 1 | 1 | 0 | 1 | 0 | 0 |
| 23 | 1 | 0 | 0 | 1 | 1 | 1 | 1 | 1 | 0 | 1 |
| 24 | 0 | 1 | 0 | 1 | 1 | 1 | 1 | 0 | 1 | 0 |
| 25 | 1 | 1 | 0 | 1 | 1 | 1 | 1 | 0 | 0 | 0 |
| 26 | 0 | 0 | 1 | 1 | 1 | 1 | 0 | 0 | 1 | 0 |
| 27 | 1 | 0 | 1 | 1 | 1 | 1 | 1 | 1 | 0 | 0 |
| 28 | 0 | 1 | 1 | 1 | 1 | 1 | 1 | 1 | 1 | 0 |
| 29 | 1 | 1 | 1 | 1 | 1 | 1 | 1 | 1 | 1 | 1 |
| 30 | 0 | 0 | 0 | 0 | 0 | 0 | 0 | 0 | 0 | 0 |
| 31 | 0 | 0 | 0 | 0 | 1 | 1 | 1 | 0 | 0 | 0 |

The foregoing description is only a preferred embodiment of the present invention and is not for use in limiting the protection scope thereof. All the modifications, equivalent replacements or improvements in the scope of the present invention shall be included in the protection scope of the present invention.

**Claims**

1. A method for coding of an enhanced Dedicated Chanel, E-DCH, Dedicated Physical Control Channel, hereinafter referred to as E-DPCCH, in a Wideband Code Division Multiple Address hereinafter referred to as WCDMA system, applied to High Speed Uplink Packet Access hereinafter referred to as HSUPA, comprising:

    encoding information bits of signalling on an E-DPCCH in a BLOCK coding manner if the number of the information bits of signalling on the E-DPCCH is not more than a threshold.

2. The method of Claim 1, wherein the threshold is at most 10 to 12.

3. The method of Claim 1, wherein said encoding the information bits of signalling comprises:

    dividing the information bits of signalling on the E-DPCCH into at least one data block;
    encoding the data block.

4. The method of Claim 3, wherein the number of the information bits of signalling on an E-DPCCH is 10, and the number of the information bits of the data block is 10;
or the number of the information bits of signalling on the E-DPCCH is 12, and the number of the information bits of the data block is 12.

5. The method of Claims 3, wherein said encoding the data block comprises:

    encoding the data block with a second-order Reed-Muller encoder; and
    said encoding the data block with the second-order Reed-Muller encoder comprises:

        inputting the data block to be encoded into the second-order Reed-Muller encoder;
        calculating output codeword bits according to the following formula:

$$b_i = \sum_{n=0}^{N-1} (a_n \times M_{i,n}) \bmod 2 \,;$$

    wherein i is the sequence number of the output codeword bits, N is the bit number of the data block to be encoded, n=0, 1, 2, 3 ...N-1, $a_n$ is the n-th bit of the data block to be encoded, $M_{i,\,n}$ is the i-th value of the n-th basic sequence, and $b_i$ is the i-th bit of the output codeword bits.

6. The method of Claim 5, wherein the number of the output codeword bits is 32, the method further comprising:

    selecting 30 bits from 32 output codeword bits as the codeword of the information bits.

7. An apparatus for coding of an enhanced Dedicated Chanel, E-DCH, Dedicated Physical Control Channel, hereinafter referred to as E-DPCCH, in a Wideband Code Division Multiple Address hereinafter referred to as WCDMA system, applied to High Speed Uplink Packet Access hereinafter referred to as HSUPA, comprising:

    a unit for encoding information bits of signalling on an E-DPCCH in a BLOCK coding manner if the number of the information bits of signalling on the E-DPCCH is not more than a threshold.

8. The apparatus of Claim 7, wherein the unit comprises:

    a module for dividing the information bits of signalling on the E-DPCCH into at least one data block;
    a module for encoding the data block in the BLOCK coding manner.

9. The apparatus of Claim 8, wherein the module for encoding the data block in a BLOCK coding manner comprises one or a plurality of BLOCK encoders, used for encoding the data blocks consisting of different numbers of information bits in a BLOCK coding manner; and said BLOCK encoder is a second-order Reed-Muller encoder.

**Patentansprüche**

1. Verfahren zum Codieren eines Enhanced Dedicated Channel, E-DCH, Dedicated Physical Control Channel, hierin nachfolgend als E-DPCCH bezeichnet, in einem Wideband Code Division Multiple Address-System, hierin nachfolgend als WCDMA-System bezeichnet, angewandt auf einen High Speed Uplink Packet Access, hierin nachfolgend als HSUPA bezeichnet, umfassend, dass Signalisierungsinformations-Bits an einem E-DPCCH auf eine BLOCK-Codierungsweise codiert werden, wenn die Anzahl der Signalisierungsinformations-Bits an dem E-DPCCH nicht größer als ein Schwellenwert ist.

2. Verfahren nach Anspruch 1
wobei der Schwellenwert höchstens 10 bis 12 beträgt.

3. Verfahren nach Anspruch 1,
wobei das Codieren der Signalisierungsinformations-Bits umfasst, dass
die Signalisierungsinformations-Bits an dem E-DPCCH in mindestens einen Datenblock geteilt werden;
der Datenblock codiert wird.

4. Verfahren nach Anspruch 3,
wobei die Anzahl der Signalisierungsinformations-Bits an einem E-DPCCH 10 beträgt und die Anzahl der Informations-Bits des Datenblocks 10 beträgt;
oder die Anzahl der Signalisierungsinformations-Bits an dem E-DPCCH 12 beträgt und die Anzahl der Informations-Bits des Datenblocks 12 beträgt.

5. Verfahren nach Anspruch 3,
wobei das Codieren des Datenblocks umfasst, dass
der Datenblock mit einem Reed-Muller-Codierer zweiter Ordnung codiert wird; und
das Codieren des Datenblocks mit dem Reed-Muller-Codierer zweiter Ordnung umfasst, dass
der zu codierende Datenblock in den Reed-Muller-Codierer zweiter Ordnung eingegeben wird;
Ausgangs-Codewort-Bits gemäß der folgenden Formel berechnet werden:

$$b_i = \sum_{n=0}^{N-1} (a_n \times M_{i,n}) \bmod 2 \; ;$$

wobei i die Sequenznummer der Ausgangs-Codewort-Bits ist, N die Bit-Anzahl des zu codierenden Datenblocks ist, n = 0, 1, 2, 3 ... N-1, $a_n$ das n-te Bit des zu codierenden Datenblocks ist, $M_{i,n}$ der i-te Wert der n-ten Basissequenz ist und $b_i$ das i-te Bit der Ausgangs-Codewort-Bits ist.

6. Verfahren nach Anspruch 5,
wobei die Anzahl der Ausgangs-Codewort-Bits 32 beträgt und das Verfahren ferner umfasst, dass
30 Bits aus 32 Ausgangs-Codewort-Bits als das Codewort der Informations-Bits ausgewählt werden.

7. Vorrichtung zum Codieren eines Enhanced Dedicated Channel, E-DCH, Dedicated Physical Control Channel, hierin nachfolgend als E-DPCCH bezeichnet, in einem Wideband Code Division Multiple Address-System, hierin nachfolgend als WCDMA-System bezeichnet, angewandt auf einen High Speed Uplink Packet Access, hierin nachfolgend als HSUPA bezeichnet, umfassend
eine Einheit zum Codieren von Signalisierungsinformations-Bits an einem E-DPCCH auf eine BLOCK-Codierungsweise, wenn die Anzahl der Signalisierungsinformations-Bits an dem E-DPCCH nicht größer als ein Schwellenwert ist.

8. Vorrichtung nach Anspruch 7,

wobei die Einheit umfasst:

ein Modul zum Teilen der Signalisierungsinformations-Bits an dem E-DPCCH in mindestens einen Datenblock;
ein Modul zum Codieren des Datenblocks auf die BLOCK-Codierungsweise.

**9.** Vorrichtung nach Anspruch 8,
wobei das Modul zum Codieren des Datenblocks auf eine BLOCK-Codierungsweise einen oder mehrere BLOCK-Codierer umfasst, die zum Codieren der Datenblöcke, die aus verschiedenen Anzahlen von Informations-Bits bestehen, auf eine BLOCK-Codierungsweise verwendet werden; und wobei der BLOCK-Codierer ein Reed-Muller-Codierer zweiter Ordnung ist.

**Revendications**

**1.** Procédé de codage d'un canal spécialisé amélioré, E-DCH pour « *Enhanced Dedicated Channel* », canal physique de commande spécialisé, ci-après E-DPCCH, pour « *Enhanced Dedicated Physical Control Channel* », dans un système d'adressage multiple à répartition par code à large bande, ci-après WCDMA, pour « *Wideband Code Division Multiple Address* », appliqué pour un accès montant par paquets à grande vitesse, ci-après HSUPA, pour « *High Speed Uplink Packet Access* », comprenant l'étape consistant à :

coder des bits d'information de la signalisation sur un canal E-DPCCH selon un mode de codage par blocs si le nombre des bits d'information de la signalisation sur le canal E-PDCCH n'est pas supérieur à un seuil.

**2.** Procédé selon la revendication 1, dans lequel le seuil est au plus de 10 à 12.

**3.** Procédé selon la revendication 1, dans lequel ledit codage des bits d'information de la signalisation comprend les étapes consistant à :

diviser les bits d'information de la signalisation sur le canal E-DPCCH en au moins un bloc de données ;
coder le bloc de données.

**4.** Procédé selon la revendication 3, dans lequel le nombre des bits d'information de la signalisation sur le canal E-DPCCH est de 10 et le nombre des bits d'information du bloc de données est de 10 ;
ou bien le nombre des bits d'information de la signalisation sur le canal E-DPCCH est de 12 et le nombre des bits d'information du bloc de données est de 12.

**5.** Procédé selon la revendication 3, dans lequel ledit codage du bloc de données comprend l'étape consistant à coder le bloc de données à l'aide d'un codeur de Reed-Muller du second ordre ; et
ledit codage du bloc de données à l'aide du codeur de Reed-Muller de second ordre comprend les étapes consistant à :

injecter le bloc de données à coder dans le codeur de Reed-Muller de second ordre ;
calculer les bits du mot de code de sortie selon la formule suivante :

$$b_i = \sum_{n=0}^{N-1} (a_n \times M_{i,n}) \bmod 2 \; ;$$

où i est le numéro d'ordre des bits du mot de code de sortie, N est le nombre de bits du bloc de données à coder, n = 0, 1, 2, 3, ..., N-1, $a_n$ est le n$^{\text{ième}}$ bit du bloc de données à coder, $M_{i,n}$ est la i$^{\text{ième}}$ valeur de la n$^{\text{ième}}$ séquence de base et $b_i$ est le i$^{\text{ième}}$ bit parmi les bits du mot de code de sortie.

**6.** Procédé selon la revendication 5, dans lequel le nombre des bits du mot de code de sortie est de 32, le procédé comprenant en outre l'étape consistant à :

sélectionner 30 bits sur les 32 bits du mot de code de sortie comme mot de code des bits d'information.

**7.** Appareil de codage d'un canal spécialisé amélioré, E-DCH, canal physique de commande spécialisé, ci-après E-DPCCH, dans un système d'adressage multiple à répartition par code à large bande, ci-après WCDMA, appliqué pour un accès montant par paquets à grande vitesse, ci-après HSUPA, comprenant :

une unité destinée à coder des bits d'information de la signalisation sur un canal E-DPCCH selon un mode de codage par blocs si le nombre des bits d'information de la signalisation sur le canal E-DPCCH n'est pas supérieur à un seuil.

**8.** Appareil selon la revendication 7, dans lequel l'unité comprend :

un module destiné à diviser les bits d'information de la signalisation sur le canal E-DPCCH en au moins un bloc de données ;
un module destiné à coder le bloc de données selon un mode de codage par bloc.

**9.** Appareil selon la revendication 7, dans lequel le module destiné à coder le bloc de données selon un mode de codage par bloc comprend un codeur par bloc ou une pluralité de codeurs par bloc, utilisés pour coder les blocs de données composés de nombres différents de bits d'information selon un mode de codage par bloc et dans lequel ledit codeur par bloc est un codeur de Reed-Muller de second ordre.

| 10 information bits $(a_9\ a_8 \ldots a_0)$ | → | (32, 10) sub-code of second order Reed-Muller code | → | Codeword of encoded information bits $(b_0\ b_1 \ldots b_{31})$ |

## Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1248485 A1